# EUROPÄISCHE PATENTSCHRIFT

(11) **EP 3 280 934 B1**
(45) Veröffentlichungstag und Bekanntmachung des Hinweises auf die Patenterteilung: **19.08.2020**
(21) Anmeldenummer: 15717783.3
(22) Anmeldetag: 09.04.2015
(51) Int. Cl.: F16K 1/00, F16K 31/02

(54) **ANORDNUNG MIT VENTIL UND STELLANTRIEB**
ARRANGEMENT WITH VALVE AND ACTUATOR
AGENCEMENT AVEC VANNE ET ACTIONNEUR

(43) Veröffentlichungstag der Anmeldung: 14.02.2018
(73) Patentinhaber: Taconova Group AG, 8050 Zürich (CH)
(72) Erfinder: DICKENSCHEID, Lothar, CH-8952 Schlieren (CH)
(74) Vertreter: Münch, Martin Walter
(86) Internationale Anmeldenummer: PCT/CH2015/000054
(87) Internationale Veröffentlichungsnummer: WO 2015/188284

(56) Entgegenhaltungen:
- EP-A1- 2 241 794
- WO-A1-03/089844
- DE-A1- 19 753 575
- DE-U1- 20 201 730
- GB-A- 798 369
- GB-A- 2 146 411
- US-A- 3 168 805

## Beschreibung

### Technisches Gebiet

Die Erfindung betrifft eine Anordnung gemäss Oberbegriff von Anspruch 1 sowie eine Verteileranordnung umfassend mindestens zwei solche Anordnungen.

### Stand der Technik

In Wasserkreisläufen zum Heizen oder Kühlen kommen Ventile zum Einsatz, mit denen die Durchflussmenge durch den Wasserkreislauf und damit die zugeführte oder abgeführte Wärmemenge geregelt wird.

Bei Heizungsanlagen mit Radiatoren weist üblicherweise jeder Radiator angeordnet an seinem Zulaufstutzen ein eigenes Ventil auf, welches über einen auf dem Ventil angeordneten thermostatischen Regelungskopf je nach gewünschter und gemessener Raumtemperatur den Zulauf ausgehend von einer bei unbetätigtem Ventil geöffneten Stellung mehr oder weniger weit schliesst. Hierzu wird eine im Regelungskopf angeordnete Schliessfeder durch ein Antriebselement des Regelungskopfes, z.B. ein Bimetall-Aktuator oder ein Dehnstoffelement, mehr oder weniger freigegeben. Ist zum Erreichen bzw. Halten der gewünschten Raumtemperatur keine Wärmezufuhr erforderlich, so wird das jeweilige Verteilerventil durch die freigegebene Schliessfeder des Regelungskopfes geschlossen gehalten.

Bei Fussbodenheizungsanlagen erfolgt die Verteilung des warmen Heizungswassers auf die einzelnen Heizkreisläufe üblicherweise über einen Verteilerbalken, welcher für jeden Heizkreislauf eine Zweigleitung aufweist, über die das Heizungswasser dem Heizkreislauf zugeführt wird. Dabei ist es üblich, mittels in den Verteilerbalken eingeschraubter Einstelleinheiten innerhalb des Verteilerbalkens für jeden Heizkreislauf ein eigenes Verteilerventil zu bilden, mittels welchem der Durchfluss durch die diesem Heizkreislauf zugeordnete Zweigleitung einstellbar bzw. regelbar ist. In Falle einer Regelung der Durchflussmenge erfolgt diese Regelung üblicherweise temperaturgeführt über einen auf der jeweiligen Einstelleinheit angebrachten Stellantrieb, welcher von einer externen Steuereinheit angesteuert wird und das ihm zugeordnete Verteilerventil je nach Ansteuerung durch die Steuereinheit mehr oder weniger schliesst. Hierzu wird eine im Stellantrieb angeordnete Schliessfeder durch ein Antriebselement des Stellantriebes, z.B. ein Dehnstoffelement, mehr oder weniger freigegeben. Wenn keine Wärmezufuhr in den jeweiligen Heizkreislauf erforderlich ist, wird das jeweilige Verteilerventil durch die freigegebene Schliessfeder des Stellantriebs geschlossen gehalten.

Die heute eingesetzten Regelungsköpfe und Stellantriebe weisen den Nachteil auf, dass sie aus einer Vielzahl von Bauteilen aufgebaut sind, was sie störanfällig, teuer in der Herstellung und zudem auch relativ voluminös macht.

Letztgenannter Nachteil ist insbesondere bei den zuletzt erwähnten Fussbodenheizungsanlagen mit Verteilerbalken mit einer Vielzahl von nebeneinander angeordneten Verteilerventilen besonders störend, da ein ständiges Bedürfnis zur Verringerung des Platzbedarfes der Verteilerbalken besteht, dem heute im Wesentlichen die Grösse (Bauhöhe und Breite) der Stellantriebe entgegensteht.

Aus WO 03/089844 A1 ist ein Verteilerventil mit Durchflussmesser bekannt, bei welchem ein von einer Einstell- und Messeinheit gebildeter Ventilschliesskörper durch handbetätigtes Verdrehen einer Gewindespindel axial gegenüber einem Ventilsitzkörper verschoben werden kann, zur Einstellung einer bestimmten Durchflussmenge durch das Ventil.

Aus GB 798,369 A sind handbetätigte Ventile zur Entnahme von brennbaren Gasen aus Gasflaschen bekannt. Der Ventilschliesskörper ist bei diesen Ventilen mit einem Ventilstössel verbunden und kann durch Betätigen des Ventilstössels mittels einer Gewindespindel entgegen der Kraft einer Schliessfeder von Ventilsitz abgehoben werden, unter einem zunehmenden Öffnen des Ventils. Bei nicht-betätigtem Ventilstössel ist das Ventil geschlossen.

Aus US 3,168,805 A ist ein Ventil für Flüssigkeiten bekannt. Der Ventilschliesskörper ist mit einem Ventilstössel verbunden und kann durch Betätigen des Ventilstössels mittels eines Dehnstoffelements entgegen der Kraft einer Schliessfeder vom Ventilsitz abgehoben werden, unter einem zunehmenden Öffnen des Ventils. Bei nicht-betätigtem Ventilstössel ist das Ventil geschlossen.

Aus GB 2 146 411 A ist ein Ventil für Gase bekannt. Der Ventilschliesskörper ist mit einem Ventilstössel verbunden und kann durch Betätigen des Ventilstössels mittels eines elektrisch beheizbaren Dehnstabes entgegen der Kraft einer Schliessfeder vom Ventilsitz abgehoben werden, unter einem zunehmenden Öffnen des Ventils. Bei nicht-betätigtem Ventilstössel ist das Ventil geschlossen.

Aus DE 197 53 575 A1 ist ein Magnetventil für eine flüssigkeitsgeregelte Heiz- und/oder Kühlanlage bekannt, z.B. die Heizungswärmetauscher eines Autos. Das Ventil weist zwei identische Ventileinheiten auf, welche in einem gemeinsamen Gehäuse angeordnet sind und einen gemeinsamen Zulaufkanal aufweisen. Jede Ventileinheit weist angeordnet auf einem gemeinsamen Ventilstössel, zwei Ventilschliesskörper auf, die zusammen mit zugeordneten Ventilsitzen zwei separate Sitzventile bilden, welche entgegengesetzte Schliessrichtungen aufweisen und von denen das eine in einen Ablaufkanal führt und das andere in einen Bypasskanal führt. Der Ventilstössel kann mittels einer Magnetspule derartig betätigt werden, dass er das Ventil, welches in den Ablaufkanal führt, entgegen der Kraft einer Feder schliesst, während er gleichzeitig das Ventil, welches in den Bypasskanal führt, öffnet. Bei nicht-betätigter Magnetspule ist das Ventil, welches in den Bypasskanal führt, geschlossen, und das andere Ventil ist geöffnet.

Aus EP 2 241 794 A1 ist ein Spezialventil für Inertgas-Löschanlagen bekannt, welches im aktivierten Zustand als Druckbegrenzungsventil funktioniert, indem ein federbelasteter Ventilschliesskörper mittels eines Differentialkolbens axial verschoben wird und dadurch den Ventilspalt mehr oder weniger weit öffnet.

Aus DE 202 01 730 U1 ist ein Verteilerbalken mit mehreren Verteilerventilen bekannt. Jedes Verteilerventil weist einen von einem Ventilstössel getragenen Ventilschliesskörper auf, der durch Druckausübung auf den aussen aus dem Ventilgehäuse herausstehenden Ventilstössel entgegen der Kraft einer Feder gegen einen Ventilsitz gedrückt werden kann. Bei nicht-betätigtem Ventilstössel ist das Ventil geöffnet.

Ein genereller Nachteil der heutigen Radiatoren- und Verteilerventile besteht auch darin, dass es nach einer längeren Nichtbetriebszeit der Heizungsanlage, z.B. nach der Sommerperiode, oftmals zu Betriebsstörungen kommt, weil sich die Ventile, welche dann durch die Schliessfeder der Regelungsköpfe bzw. Stellantriebe nach längerer Zeit erstmals wieder freigegeben werden, oftmals nicht mehr selbsttätig öffnen, so dass kein Durchfluss durch das jeweilige Ventil stattfindet und auch kein Regeleingriff über den Regelungskopf oder Stellantrieb möglich ist. Ein weiterer Nachteil besteht darin, dass es heute bei derartigen Ventilanordnungen mit Stellantrieben nicht möglich ist, das Ventil auch manuell zu betätigen, z.B. zu Testzwecken.

Aus CN203082223(U) ist ein Ventil für einen Wasserhahn bekannt. Das Ventil weist ein Gehäuse auf, welches eine Zuleitung und eine Ableitung bildet, und eine von aussen in das Gehäuse eingesetzte Einstelleinheit zum Einstellen einer Durchflussmenge durch das Ventil. Zum Öffnen des Ventils wird ein Ventilstössel der Einstelleinheit, welcher einen Ventilschliesskörper trägt, durch manuelles Bewegen eines Betätigungshebels axial entgegen der Kraft einer Feder verschoben, wodurch der Ventilschliesskörper von einem Ventilsitz abgehoben wird und so ein Ventilspalt geöffnet wird.

### Darstellung der Erfindung

Es stellt sich daher die Aufgabe, technische Lösungen zur Verfügung zu stellen, welche die Nachteile des Standes der Technik nicht aufweisen oder diese zumindest teilweise vermeiden.

Diese Aufgabe wird durch eine Anordnung nach Anspruch 1 gelöst. Gemäss diesem betrifft ein erster Aspekt der Erfindung eine Anordnung umfassend ein Ventil für die Verwendung im Zu- oder Rücklauf eines Wasserkreislaufs zum Heizen oder Kühlen, bevorzugterweise ein Ventil zur direkten Installation am Zulaufstutzen eines Radiatorenheizkörpers (Heizkörperventil) oder ein in Kombination mit einem Verteilerbalken gebildetes Verteilerventil für einen Fussbodenheizkreislauf, in Kombination mit einem Stellantrieb.

Das Ventil weist ein einteiliges oder mehrteiliges Gehäuse auf, welches eine Zuleitung und eine Ableitung bildet. In dieses Gehäuse dringt von aussen eine separat von diesem ausgebildete Einstelleinheit ein, zur Einstellung bzw. Regelung einer Durchflussmenge durch das Ventil von der Zuleitung zu der Ableitung. Je nach Bauart des Ventils kann das Ventil nur in einer Richtung oder in beiden Richtungen bestimmungsgemäss durchströmt werden, wobei sich im letztgenannten Fall die Festlegung, welche Leitung die Zuleitung und welche Leitung die Ableitung ist, anhand der Einbausituation ergibt.

Mittels dem Stellantrieb kann im bestimmungsgemässen Betrieb der Ventilstössel der Einstelleinheit zum Öffnen des Ventilspalts entgegen den Schliesskräften betätigt bzw. verschoben werden, bevorzugterweise in mehreren Stufen oder stufenlos.

Die Einstelleinheit, welche an späterer Stelle nochmals einzeln erläutert wird, weist einen Ventilschliesskörper auf, der mit einem ebenfalls zur Einstelleinheit gehörenden Ventilstössel derartig wirkverbunden ist, dass er zusammen mit einem bei bestimmungsgemässem Betrieb gegenüber dem Ventilgehäuse feststehenden Ventilsitzkörper einen durch axiales Verschieben des Ventilstössels einstellbaren Ventilspalt bildet, mittels welchem die Durchflussmenge durch das Ventil eingestellt bzw. geregelt werden kann.

Das Ventil ist dabei derartig ausgebildet, dass der Ventilspalt im bestimmungsgemässen Betrieb bei nicht-betätigtem Ventilstössel, d.h. bei Abwesenheit von Einstell- bzw. Betätigungskräften, infolge hydraulisch, pneumatisch und/oder mechanisch erzeugter Schliesskräfte geschlossen ist und diese Kräfte bei einer Betätigung des Ventilstössels zum Öffnen des Ventilspalts überwunden werden müssen.

Mit solchen Ventilen wird es möglich, Stellantriebe zu deren Betätigung zu entwickeln und zu verwenden, welche ohne Schliessfeder auskommen und eine direkte Betätigung des Ventilstössels über das Antriebselement des Stellantriebs erlauben. Hierdurch lässt sich die Baugrösse (Bauhöhe und Breite) der Stellantriebe deutlich verringern und es wird möglich, ein Vielfaches der bei den heute bekannten Ventilen zur Verfügung stehenden Kraft zur Öffnung der Ventile bereit zu stellen, was die Betriebssicherheit, insbesondere nach einem längeren Betriebsunterbruch der Heizungsanlage mit geschlossenem Ventil, deutlich verbessert.

Hydraulisch können die Schliesskräfte beispielsweise dadurch erzeugt werden, dass das durch das Ventil strömende Medium eine in Ventilschliessrichtung wirkende Kraft auf den Ventilschliesskörper und/oder den Ventilstössel ausübt, welche das Ventil bei nicht betätigtem Ventilstössel schliesst und/oder dass das Ventil durch den Druck des anstehenden Mediums geschlossen gehalten wird.

Pneumatisch können die Schliesskräfte beispielsweise dadurch erzeugt werden, dass ein pneumatisches Federelement oder ein unter Überdruck stehender Faltenbalg vorhanden ist, welches oder welcher permanent eine in Ventilschliessrichtung wirkende Kraft auf den Ventilschliesskörper oder den Ventilstössel ausübt.

Mechanisch können die Schliesskräfte beispielweise dadurch erzeugt werden, dass eine Feder, z.B. eine Spiralfeder, vorhanden ist, welche permanent eine in Ventilschliessrichtung wirkende Kraft auf den Ventilschliesskörper oder den Ventilstössel ausübt. Diese Variante ist besonders bevorzugt, weil sie mit einfachen Mitteln eine sichere Schliessfunktion ermöglicht.

Weiter ist es auch vorgesehen, die Schliesskräfte durch Kombination zweier oder mehrerer der zuvor genannten Funktionsprinzipien zu erzeugen.

Die Zuleitung und die Ableitung des Ventils können von einem gemeinsamen Gehäuseteil oder von separat ausgebildeten Gehäuseteilen gebildet sein. Je nach Ventilvariante ist die eine oder die andere Ausführungsform bevorzugter. So ist es z.B. bei Heizkörperventilen, bei denen das Gehäuse üblicherweise als 90° Rohrbogen ausgebildet ist in welchen die Einstelleinheit im Bereich der Ecke eingeschraubt ist, bevorzugt, dass die Zuleitung und die Ableitung von einem gemeinsamen Gehäuseteil gebildet sind, während es bei Verteilerventilen bevorzugt ist, dass die Zuleitung und die Ableitung von separaten Gehäuseteilen (Verteilerbalken/Zweigleitungsstutzen) gebildet sind, indem die Zweigleitungsstutzen in den Verteilerbalken eingeschraubt sind, da hierdurch die Herstellung des Verteilerbalkens deutlich vereinfacht wird.

Bevorzugterweise dringt die Einstelleinheit gegenüberliegend der Zuleitung oder gegenüberliegend der Ableitung in das Gehäuse ein. Hierdurch wird es auf einfache Weise möglich, eine Seite des Ventilspalts der Einstelleinheit direkt an die jeweilige Zu- oder Ableitung anzuschliessen.

Dabei ist es von Vorteil, dass der Ventilschliesskörper der Einstelleinheit an dem der gegenüberliegenden Zu- bzw. Ableitung zugewandten Ende des Ventilstössels angeordnet ist. Hierdurch wird ein kompakter Aufbau des Ventils möglich.

Ist das Ventil dabei so aufgebaut, dass der Ventilstössel zum Öffnen des Ventilspalts in Richtung auf die gegenüberliegende Zu- bzw. Ableitung zu verschoben werden muss, was bevorzugt ist, so wird ein einfacher Aufbau des Ventils begünstigt.

Der Ventilsitzkörper ist von einem Bauteil der Einstelleinheit gebildet. Hierdurch wird die gesamte Ventilfunktionalität von der Einstelleinheit bereitgestellt und das Ventilgehäuse dient lediglich der Zu- und Abführung des Mediums. Dies ergibt den Vorteil, dass durch einen Austausch der Einstelleinheit auf einfache Weise sämtliche funktionsrelevanten Komponenten des Ventils ausgetauscht werden können.

In noch einer weiteren bevorzugten Ausführungsform des Ventils sind der Ventilschliesskörper und der Ventilsitzkörper derartig ausgebildet, dass sich bei geschlossenem Ventilspalt eine radiale oder zumindest teilweise radiale Abdichtung zwischen dem Ventilschliesskörper und dem Ventilsitzkörper ergibt. Dieses erfolgt mit Vorteil über ein zumindest teilweise radial abdichtendes Dichtelement des Ventilschliesskörpers. Die teilweise radiale Abdichtung verbessert das Öffnungsverhalten nach längeren geschlossenen Betriebsphasen und einen Reinigungseffekt auf die Dichtfläche.

Zur Realisierung der zumindest teilweisen radialen Abdichtung ist die in radialer Richtung gesehen äusserste Umfangsbegrenzung des Ventilschliesskörpers bevorzugterweise von einem separat ausgebildeten Dichtelement, z.B. von einem O-Ring, gebildet, welches bei geschlossenem Ventilspalt eine zumindest teilweise radiale Abdichtung gegenüber dem Ventilsitzkörper bewirkt und gleichzeitig formschlüssig verhindert, dass der Ventilstössel mit dem Ventilschliesskörper in der Schliessbewegungsrichtung des Ventilstössels aus der Einstelleinheit entfernt werden kann. Auf diese Weise kann das Dichtelement gleichzeitig der Sicherung des Ventilstössels dienen.

Mit Vorteil verfügt das Ventil im Lieferzustand über bevorzugterweise werkzeuglos entfernbare Arretierungsmittel, mittels welchen der Ventilstössel in einer axialen Position arretiert ist, in welcher der Ventilspalt geöffnet ist, bevorzugterweise maximal geöffnet ist. Die Arretierung erfolgt mit Vorteil durch Formschluss. Dies ist insbesondere bei Verteilerventilen von Vorteil, weil auf diese Weise auch ohne bereits installierte Stellantriebe die einzelnen Heiz- oder Kühlkreisläufe betrieben und hydraulisch abgeglichen werden können.

Bevorzugterweise umfassen dabei die Arretierungsmittel einen Arretierungsstift, welcher von aussen her radial in die Einstelleinheit eindringt, z.B. über eine Entlastungsbohrung, und den Ventilstössel dabei radial durchsetzt oder zumindest radial in diesen eindringt. Auf diese Weise kann auf einfache Weise eine formschlüssige Arretierung realisiert werden.

Der Ventilstössel der Einstelleinheit ist zumindest im Bereich seines dem Ventilschliesskörper abgewandten Endes aus einem elektrisch schlecht bzw. nicht leitenden Material gebildet, z.B. aus einem Kunststoff, so dass eine etwaige Einleitung von elektrischem Strom von einem an diesen anschliessenden elektrisch betätigten Stellantrieb über den Ventilstössel in das im Ventil geführte Medium sicher verhindert werden kann.

In noch einer weiteren bevorzugten Ausführungsform des Ventils weist ein feststehendes Gehäuseteil der Einstelleinheit, welches zumindest teilweise von dem Ventilstössel durchsetzt ist, radiale oder halbaxiale Durchtrittsöffnungen auf, bevorzugterweise mit kreisrunder oder rechteckiger Form, durch welche das Medium je nach Einbausituation bzw. Durchströmungsrichtung des Ventils von der Zuleitung zum Ventilspalt strömen kann oder vom Ventilspalt zu der Ableitung strömen kann.

Hierdurch ergibt sich insbesondere in Kombination mit der weiteren bevorzugten Ausgestaltung, dass der feststehende Gehäuseteil der Einstelleinheit bevorzugterweise stirnseitig über Dichtflächen und/oder über eine Dichtung mit einem die Zu- oder Ableitung bildenden feststehenden Gehäuseteil des Ventilgehäuses in abdichtendem Kontakt steht, derart, dass zwischen den Durchtrittsöffnungen und der von diesem Gehäuseteil gebildeten Zu- oder Ableitung ein fluiddichter Strömungskanal gebildet ist, der Vorteil, dass ein denkbar einfacher Ventilgehäuseaufbau möglich wird und sämtliche Funktionskomponenten von der Einstelleinheit gebildet sind, welche auf einfache Weise austauschbar ausgestaltet werden kann.

In einer besonders bevorzugten Ausführungsform ist das Ventil als Verteilerventil für die Verwendung im Zu- oder Rücklauf eines Wasserkreislaufs zum Heizen oder Kühlen ausgebildet, also derart, dass das Gehäuse des Ventils im Wesentlichen von einem je nach Durchströmungsrichtung die Zu- oder Ableitung bildenden Verteilerbalken und einer von dem Verteilerbalken abgehenden, je nach Durchströmungsrichtung die Ableitung oder die Zuleitung bildenden Zweigleitung gebildet ist. Dabei dringt die Einstelleinheit gegenüberliegend der Zweigleitung in den Verteilerbalken ein. Bei derartigen Ausgestaltungen des Ventils treten die Vorteile der Erfindung besonders deutlich zu Tage.

Dabei ist es weiter bevorzugt, dass der Ventilschliesskörper an dem der Zweigleitung zugewandten Ende des Ventilstössels angeordnet ist, und insbesondere auch, dass der Ventilstössel zum Öffnen des Ventilspalts entgegen den Schliesskräften, bevorzugterweise entgegen einer von Federmitteln erzeugten Federkraft, in Richtung auf die Zweigleitung zu verschoben werden muss. Durch diese Ausgestaltungen werden sehr kompakte Verteilerventile möglich.

Weiter ist es bei den Verteilerventilen wünschenswert, dass der feststehende Gehäuseteil der Einstelleinheit, bevorzugterweise stirnseitig, über Dichtflächen und/oder über eine Dichtung mit einem feststehenden Gehäuseteil der Zweigleitung in abdichtenden Kontakt steht, derart, dass zwischen den Durchtrittsöffnungen und der Zweigleitung ein fluiddichter Strömungskanal gebildet ist. Auch diese Massnahme begünstigt einen einfachen und kompakten Ventilaufbau.

Die Einstelleinheit des Ventils umfasst einen Grundkörper zum Einschrauben der Einstelleinheit in eine Aufnahmeöffnung eines Ventilgehäuses, den Ventilstössel, den Ventilschliesskörper und den Ventilsitzkörper. Der Ventilsitzkörper ist gegenüber dem Grundkörper feststehend ausgebildet und der Ventilstössel ist axial verschiebbar gegenüber dem Grundkörper in dem Grundkörper gelagert. Dabei ist der Ventilstössel mit dem Ventilschliesskörper derartig wirkverbunden, z.B. durch gemeinsame einstückige Ausbildung, dass der Ventilschliesskörper zusammen mit dem Ventilsitzkörper den durch axiales Verschieben des Ventilstössels einstellbaren und auch vollständig schliessbaren Ventilspalt bildet. Dabei ist die Einstelleinheit derartig ausgebildet, dass der Ventilspalt bei nicht-betätigtem Ventilstössel, d.h. bei Abwesenheit von externen, von aussen her in Öffnungsrichtung auf den Ventilstössel einwirkenden Kräften, geschlossen ist, z.B. durch die Schliesskraft einer Schliessfeder, oder eine geschlossene Position einnehmen kann, so dass bei nicht-betätigtem Ventilstössel der Ventilspalt, z.B. durch am Ventilschliesskörper angreifende Strömungskräfte des durch das Ventil strömenden Mediums, geschlossen werden kann.

Bevorzugterweise weist die Einstelleinheit Federmittel auf, welche derartig mit dem Ventilschliesskörper oder dem Ventilstössel wirkverbunden sind, dass der Ventilspalt bei nicht-betätigtem Ventilstössel infolge der Federkraft der Federmittel geschlossen ist und bei einer Betätigung des Ventilstössels zum Öffnen des Ventilspalts die Federkraft der Federmittel überwunden werden muss.

Weiter ist es bevorzugt, dass der Grundkörper der Einstelleinheit in einem Bereich, in welchem er zumindest teilweise von dem Ventilstössel durchsetzt ist, radiale oder halbaxiale Durchtrittsöffnungen aufweist, insbesondere mit kreisrunder oder rechteckiger Form, durch welche je nach Durchströmungsrichtung Medium bis zum Ventilspalt in die Einstelleinheit einströmen kann bzw. vom Ventilspalt kommendes Medium aus der Einstelleinheit ausströmen kann.

Auch ist es von Vorteil, dass der Ventilsitzkörper von dem Grundkörper der Einstelleinheit gebildet ist.

Der Stellantrieb der erfindungsgemässen Anordnung umfasst ein pneumatisch, hydraulisch oder elektrisch ansteuerbares bzw. aktivierbares Antriebselement, z.B. eine pneumatische oder hydraulische Kolben/ZylinderEinheit, einen elektrischen Stellmotor oder ein elektrisch beheizbares Dehnstoffelement, zur Bereitstellung der Betätigungskräfte zum axialen Verschieben des Ventilstössels zwecks Öffnung des Ventilspaltes. Derartige Antriebselemente lassen sich auf einfache Weise durch zentrale Steuerungseinheiten ansteuern bzw. aktivieren.

Das Antriebselement des Stellantriebs ist in axialer Verlängerung des Ventilstössel in der Schliessbewegungsrichtung desselben angeordnet, wobei es weiter bevorzugt ist, dass das Antriebselement direkt auf das in Schliessbewegungsrichtung zeigende Ende des Ventilstössels einwirken kann, zum Verschiebung des Ventilstössels entgegen der Schliessbewegungsrichtung zwecks Öffnung des Ventilspaltes.

Dies bedeutet bei den als Verteilerventil ausgebildeten Ventilen, dass das Antriebselement in axialer Verlängerung des Ventilstössels in der Richtung wegzeigend von der Zweigleitung angeordnet ist und das Antriebselement bevorzugterweise direkt auf das der Zweigleitung abgewandte Ende des Ventilstössels einwirken kann, zur Verschiebung des Ventilstössels in Richtung auf die Zweigleitung zu unter einem Öffnen des Ventilspaltes.

Derartige erfindungsgemässe Anordnungen wiesen den Vorteil auf, dass sie einfach und robust aufgebaut sein können und durch die Möglichkeit der direkten Einwirkung des Antriebselements auf den Ventilstössel ein hoher mechanischer Wirkungsgrad erreichbar ist.

Weiter ist das Antriebselement des Stellantriebs mittels einer, z.B. als Druckknopf ausgebildeten, Tragstruktur in der Einstelleinheit aufgenommen, welche axial verschiebbar entlang der Verschiebeachse des Ventilstössels in der Einstelleinheit gelagert ist, derart, dass sie bei geschlossenem Ventilspalt aus einer Grundposition durch manuelle Druckbetätigung von aussen her zusammen mit dem darin aufgenommenen Antriebselement entgegen der Schliessbewegungsrichtung des Ventilstössels verschoben werden kann, unter einem zumindest über einen Teil des Verschiebeweges gleichzeitigen Verschiebens des Ventilstössels in diese Richtung und einem daraus resultierenden Öffnen des Ventilspaltes. Durch eine derartige Ausgestaltung wird es möglich, den Ventilspalt auch manuell zu öffnen, z.B. zu Testzwecken.

Ist dabei die Lagerung der Tragstruktur in der Einstelleinheit derartig, dass sie in einer Verschiebeposition, in welcher der Ventilspalt geöffnet ist, bevorzugterweise maximal geöffnet ist, verrastet, so dass sie bei einem Aufheben der manuellen Druckbetätigung in dieser Verschiebeposition verbleibt, was bevorzugt ist, so lässt sich manuell eine dauerhafte Öffnung des Ventilspaltes herbeiführen.

Dabei ist es weiter bevorzugt, dass die Tragstruktur derartig in der Einstelleinheit gelagert und das Antriebselement derartig darin angeordnet ist, dass die Verrastung der Tragstruktur durch Ansteuerung bzw. Aktivierung des Antriebselements aufgehoben werden kann. Hierdurch lässt sich eine automatische Zurücksetzung in den ursprünglichen Zustand beim Aktivieren bzw. Ansteuern des Antriebselements bewirken.

Auch ist es bei den zuvor erwähnten Ausführungsformen der Anordnung von Vorteil, wenn die Tragstruktur derartig in der Einstelleinheit gelagert ist, dass von aussen visuell erkennbar ist, ob sich die Tragstruktur in der Grundposition oder in der verrasteten Verschiebeposition befindet.

Weiter ist die erfindungsgemässe Anordnung bevorzugterweise derartig ausgestaltet, dass der Stellantrieb während dem bestimmungsgemässen Betrieb des mit ihm bestückten Ventils austauschbar ist, ohne dass es zu Leckagen kommt.

Ein zweiter Aspekt der Erfindung betrifft eine Verteileranordnung mit mindestens zwei Anordnungen gemäss dem ersten Aspekt der Erfindung, wobei die Gehäuse der Ventile mit einem gemeinsamen Verteilerbalken gebildet sind. Derartige Verteileranordnungen stellen eine weitere bevorzugte Handelsform der Erfindung dar.

### Kurze Beschreibung der Zeichnungen

Weitere Vorteile und Anwendungen der Erfindung ergeben sich aus der nun folgenden Beschreibung anhand der Figuren. Dabei zeigen:
Fig. 1 einen Vertikalschnitt durch eine erfindungsgemässe Anordnung umfassend ein Verteilerventil mit Stellantrieb;
Fig. 2 einen Vertikalschnitt durch die Einstelleinheit und den Stellantrieb des Verteilerventils aus Fig. 1 bei geschlossenem Ventilspalt;
Fig. 2a das Detail X aus Fig. 2;
Fig. 3 einen Vertikalschnitt durch die Einstelleinheit und den Stellantrieb des Verteilerventils aus Fig. 1 bei vollständig geöffnetem Ventilspalt;
Fig. 3a das Detail X aus Fig. 3;
Fig. 4 einen Vertikalschnitt durch die Einstelleinheit und den Stellantrieb des Verteilerventils aus Fig. 1 bei eingerasteter Betätigungstaste und nichtausgefahrenem Betätigungsstössel;
Fig. 5 einen Vertikalschnitt durch die Einstelleinheit und den Stellantrieb des Verteilerventils aus Fig. 1 bei eingerasteter Betätigungstaste und teilweise ausgefahrenem Betätigungsstössel; und
Fig. 6 einen Vertikalschnitt durch die Einstelleinheit des Verteilerventils aus den Figuren 1 bis 5 im Auslieferungszustand.

### Wege zur Ausführung der Erfindung

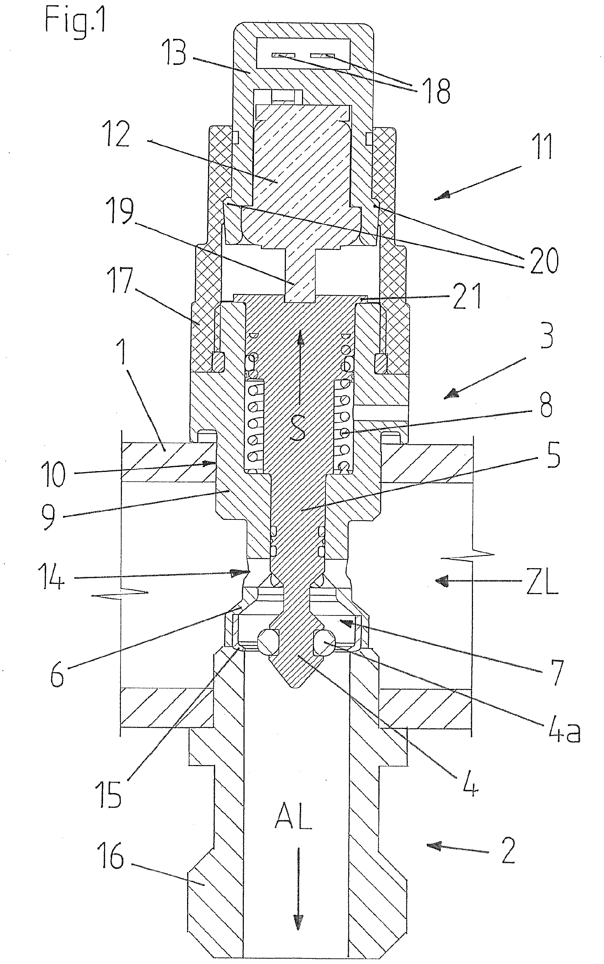

Fig. 1 zeigt eine erfindungsgemässe Anordnung umfassend eine Verteilerventil mit einer Einstelleinheit 3 und einem Stellantrieb 11 zur Betätigung der Einstelleinheit 3 im Vertikalschnitt. Das Verteilerventil und der Stellantrieb 11 bilden zusammen eine erfindungsgemässe Anordnung gemäss dem ersten Aspekt der Erfindung. Das Verteilerventil ist Teil einer erfindungsgemässen Verteileranordnung gemäss dem zweiten Aspekt der Erfindung und ist im Zulauf eines Warmwasser-Heizkreislaufs (nicht gezeigt) angeordnet. Die rechts und/oder links neben dem dargestellten Verteilerventil angeordneten weiteren Verteilerventile der Verteileranordnung sind nicht dargestellt und vom Verteilerbalken 1 ist nur der Teil gezeigt, der zur Illustration des dargestellten Verteilerventils erforderlich ist.

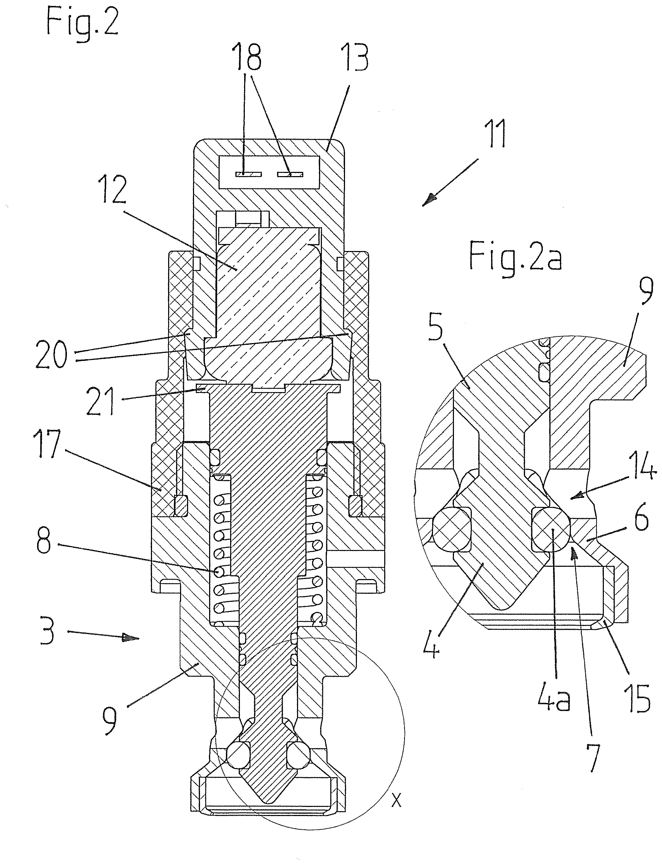

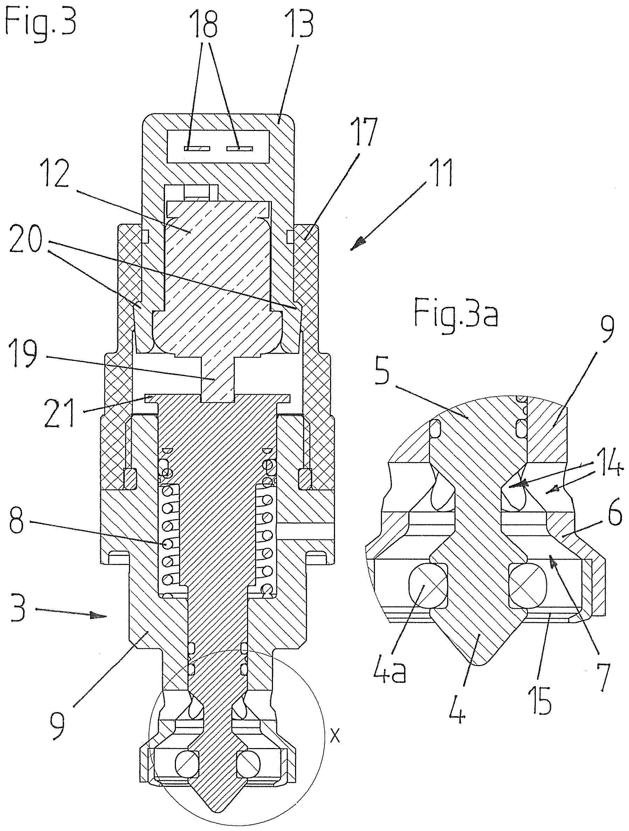

Wie in Zusammenschau mit den Figuren 2, 2a und 3, 3a zu erkennen ist, welche Vertikalschnitte und Details dieser Schnitte durch die Einstelleinheit 3 und den Stellantrieb 11 bei geschlossenem Ventilspalt 7 (Figuren 2 und 2a) und bei vollständig geöffnetem Ventilspalt 7 (Figuren 3 und 3a) zeigen, wird das Ventilgehäuse 1, 16 des Verteilerventils von einem die Zuleitung ZL bildenden Verteilerbalken 1 und einem von unten in den Verteilerbalken 1 eingeschraubten Stutzen 16 gebildet. Der Stutzen 16 bildet eine vom Verteilerbalken 1 abgehende Zweigleitung 2, welche die Ableitung AL des Verteilerventils bildet und in den Zulauf des Warmwasser-Heizkreislaufs (nicht gezeigt) einmündet.

Gegenüberliegend der Zweigleitung 2 ist die Einstelleinheit 3, welche dem Einstellen der Durchfluss menge durch die Zweigleitung 2 dient, von oben in den Verteilerbalken 1 eingeschraubt.

Die Einstelleinheit 3 umfasst einen Grundkörper 9, mit welchem sie in eine Gewindebohrung 10 im Verteilerbalken 1 eingeschraubt ist, sowie einen Ventilstössel 5, einen Ventilschliesskörper 4 mit zugehöriger O-Ring-Dichtung 4a und einen Ventilsitzkörper 6, welcher einstückig mit dem Grundkörper 9 ausgebildet ist und den Ventilsitz für den Ventilschliesskörper 4 bzw. die Dichtung 4a bereitstellt. Der Grundkörper 9 grenzt stirnseitig mit einer Dichtung 15 an das in den Verteilerbalken 1 hineinragende Ende des Zweigleitungsstutzens 16 an.

Der Ventilschliesskörper 4 ist an demjenigen Ende des Ventilstössels 5 angeordnet, welches der Zweigleitung 2 zugewandt ist, und ist einstückig mit dem Ventilstössel 5 aus einem Kunststoffmaterial gebildet. Der Ventilstössel 5 ist axial verschiebbar in dem Grundkörper 9 gelagert, derart, dass durch ein axiales Verschieben des Ventilstössels 5 ein zwischen dem Ventilschliesskörper 4 mit Dichtung 4a und dem Ventilsitzkörper 6 gebildeter Ventilspalt 7 verändert bzw. eingestellt und auch geschlossen werden kann. Wie insbesondere aus Fig. 2a ersichtlich ist, ergibt sich bei geschlossenem Ventilspalt 7 eine radiale Abdichtung zwischen dem Ventilschliesskörper 4 und dem Ventilsitzkörper 6 über den dazwischen angeordneten O-Ring 4a. Der O-Ring 4a verhindert gleichzeitig auch formschlüssig, dass der Ventilstössel 5 mit dem Ventilschliesskörper 4 in der Schliessbewegungsrichtung S des Ventilstössels 5 aus der Einstelleinheit 3 entfernt werden kann, wenn kein Stellantrieb 11 montiert ist.

Der Grundkörper 9 der Einstelleinheit 3 weist direkt oberhalb des Ventilsitzkörpers 6 radiale Durchtrittsöffnungen 14 mit kreisrunder Form auf, durch welche das in der Zuleitung ZL geführte Warmwasser in die Einstelleinheit 3 einströmen kann. Bei geschlossenem Ventilspalt 7 sind die Zuleitung ZL und die Ableitung AL über die Einstelleinheit 3 voneinander getrennt. Bei geöffnetem Ventilspalt 7 strömt Warmwasser von der Zuleitung ZL über die Durchtrittsöffnungen 14 und den Ventilspalt 7 in die Ableitung AL, wobei sich die Durchflussmenge über die Öffnungsweite des Ventilspalts 7 einstellen lässt.

Weiter umfasst die Einstelleinheit 3 eine Spiralfeder 8, welche von dem Ventilstössel 5 durchsetzt ist und den Ventilstössel 5 in der Schliessbewegungsrichtung S mit einer Federkraft beaufschlagt, so dass der Ventilspalt 7 bei nicht betätigtem Verteilerventil, d.h. bei Abwesenheit von Betätigungskräften am Ventilstössel 5, durch die Federkraft geschlossen wird bzw. geschlossen gehalten wird. Diese Situation ist in den Figuren 2 und 2a dargestellt.

Um ausgehend von der in den Figuren 2 und 2a dargestellten vollständig geschlossenen Betriebssituation zu der in den Figuren 3 und 3a dargestellte maximal geöffnete Betriebssituation zu gelangen, muss der Ventilstössel 5 betätigt werden, derart, dass er entgegen der Federkraft der Spiralfeder 8 in Richtung auf die Zweigleitung 2 zu verschoben wird.

Hierzu dient der Stellantrieb 11. Dieser besteht aus einem Adaptergehäuse 17, mittels welchem er an der Einstelleinheit 3 befestigt ist, und in welchem in einem Betätigungsknopf 13 ein Dehnstoffelement 12 als Antriebselement aufgenommen ist, welches elektrisch über zwei aussen am Betätigungsknopf 13 angebrachte elektrische Kontakte 18 aktivierbar ist. Das Dehnstoffelement 12 ist in axialer Verlängerung des Ventilstössels 5 in der Schliessbewegungsrichtung S des Ventilstössels 5 angeordnet und wirkt im aktivierten Zustand mit einem Betätigungsstössel 19 direkt auf das der Zweigleitung 2 abgewandte Ende des Ventilstössels 5 ein, so dass der Ventilstössel 5 in Richtung auf die Zweigleitung 2 zu verschoben wird und der Ventilspalt 7 geöffnet wird. Diese Situation ist in den Figuren 3 und 3a dargestellt.

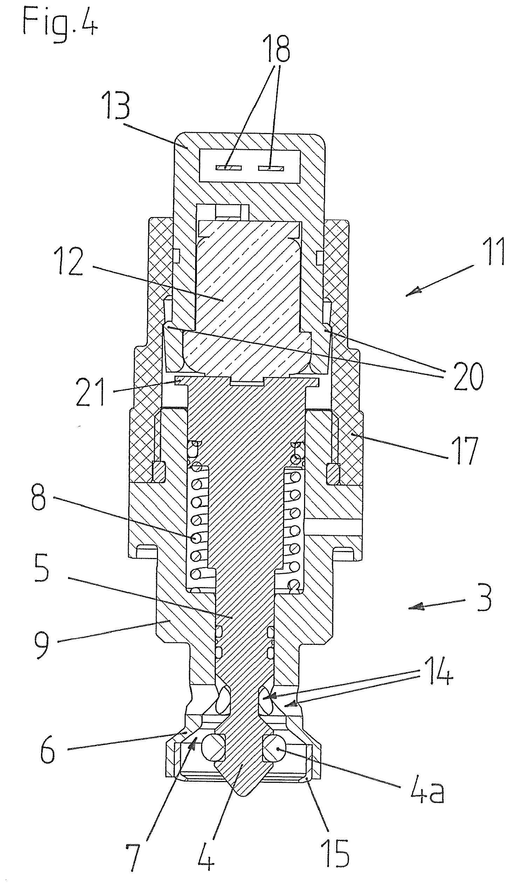

Wie aus einer Zusammenschau der Figuren 2 und 4 ersichtlich wird, ist der Betätigungsknopf 13 mit dem darin aufgenommenen Dehnstoffelement 12 axial verschiebbar entlang der Verschiebeachse des Ventilstössels 5 im Adaptergehäuse 17 gelagert, derart, dass er ausgehend von der in Fig. 2 dargestellten Situation mit nicht aktiviertem Dehnstoffelement 12 und geschlossenem Ventilspalt 7 aus der in Fig. 2 dargestellten Grundposition durch manuelle Druckbetätigung von aussen her zusammen mit dem darin aufgenommenen Dehnstoffelement 12 in Richtung auf die Zweigleitung 2 zu in die in Fig. 4 dargestellte Verschiebeposition verschoben werden kann. Dabei wird durch das am Ventilstössel 5 anstehende Dehnstoffelement 12 zumindest über einen Teil des Verschiebeweges des Betätigungsknopfes 13 gleichzeitig auch der Ventilstössel 5 in diese Richtung verschoben, was ein Öffnen des Ventilspaltes 7 zur Folge hat. Bei Erreichen der in Fig. 4 dargestellten Verschiebeposition verrastet der Betätigungsknopf 13 sodann mit daran gebildeten Rastnasen 20 im Adaptergehäuse 17, so dass er nach einem Weglassen der manuellen Druckbetätigung in dieser Verschiebeposition verbleibt und der Ventilspalt 7 geöffnet bleibt.

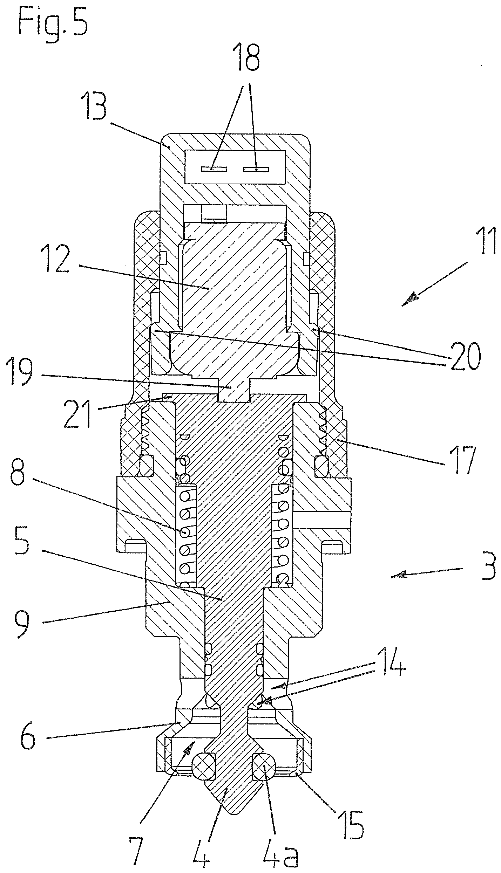

Um diese in Fig. 4 dargestellte verrastete Situation wieder aufzuheben, muss der Betätigungsknopf mit einer gewissen Kraft in Richtung von der Zweigleitung 2 wegzeigen relativ zum Adaptergehäuse 17 bewegt werden. Dies kann durch manuelles Ergreifen und Herausziehen des Betätigungsknopfes 13 aus dem Adaptergehäuse 17 erfolgen oder durch elektrisches Aktivieren des Dehnstoffelements 12. Im letztgenannten Fall fährt der Betätigungsstössel 19 aus dem Dehnstoffelement 12 aus und verschiebt den Ventilstössel 5 in Richtung auf die Zweigleitung 2 zu, bis eine an dem der Zweigleitung 2 abgewandten Ende des Ventilstössels 5 gebildete Anschlagschulter 21 an der Stirnseite des Grundkörpers 9 der Einstelleinheit 3 anschlägt. Diese Situation ist in Fig. 5 dargestellt.

Durch weiteres Aktivieren des Dehnstoffelements 12 und entsprechendes weiteres Ausfahren des Betätigungsstössels 19 aus dem Dehnstoffelement 12 wird sodann die Haltekraft der Verrastung überwunden und der Betätigungsknopf wird zurück in seine Grundposition geführt.

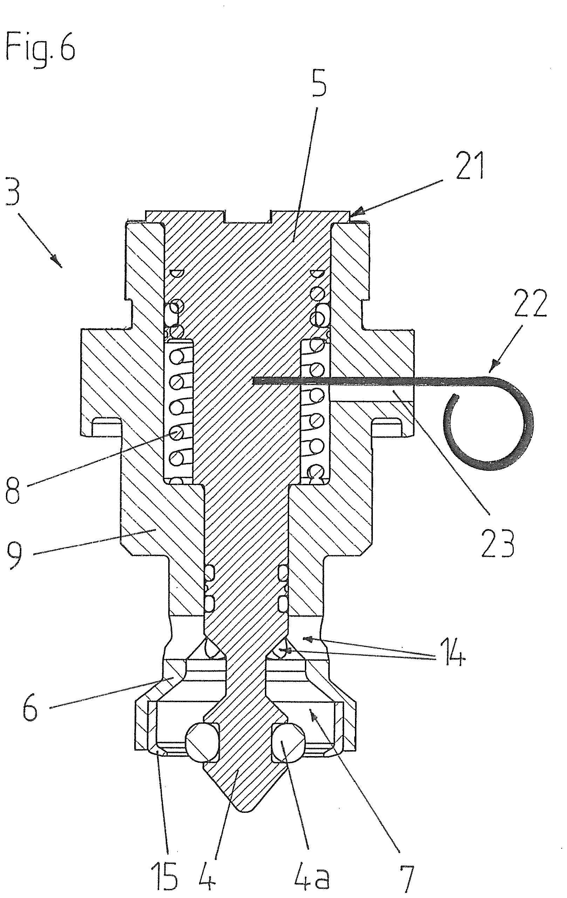

Fig. 6 zeigt einen Vertikalschnitt durch die Einstelleinheit des Verteilerventils im Auslieferungszustand, d.h. vor der ersten Inbetriebnahme. Wie zu erkennen ist, ist der Ventilstössel 5 mittels eines von aussen her radial über eine Entlastungsbohrung 23 im Grundkörper 9 in die Einstelleinheit 3 und in den Ventilstössel 5 eindringenden Arretierungsstifts 22 formschlüssig in einer axialen Position arretiert, in welcher der Ventilspalt 7 geöffnet ist. Wird der Arretierungsstift 22 radial aus der Einstelleinheit 3 herausgezogen, so drückt die Spiralfeder 8 den Ventilstössel 5 in die Schliessbewegungsrichtung S und schliesst dadurch den Ventilspalt 7.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Anordnung umfassend ein Ventil für die Verwendung im Zu- oder Rücklauf eines Wasserkreislaufs zum Heizen oder Kühlen, mit einem eine Zuleitung (ZL) und eine Ableitung (AL) bildenden Gehäuse (1, 16) und einer separat vom Gehäuse (1, 16) ausgebildeten und von aussen in das Gehäuse (1, 16) eindringenden Einstelleinheit (3) zum Einstellen einer Durchflussmenge durch das Ventil von der Zuleitung (ZL) zu der Ableitung (AL),
wobei die Einstelleinheit einen Grundkörper (9) umfasst, mit welchem sie in eine Aufnahmeöffnung des Ventilgehäuses (1) eingeschraubt ist, sowie einen Ventilstössel (5), einen Ventilschliesskörper (4, 4a) und einen Ventilsitzkörper (6),
wobei der Ventilsitzkörper (6) gegenüber dem Grundkörper (9) feststehend ist und der Ventilstössel (5) gegenüber dem Grundkörper (9) axialverschieblich in dem Grundkörper (9) gelagert ist und mit dem Ventilschliesskörper (4, 4a) derartig wirkverbunden ist, dass der Ventilschliesskörper (4a, 4a) zusammen mit dem Ventilsitzkörper (6) einen durch axiales Verschieben des Ventilstössels (5) einstellbaren Ventilspalt (7) bildet,
wobei das Ventil derartig ausgebildet ist, dass der Ventilspalt (7) im bestimmungsgemässen Betrieb bei nicht-betätigtem Ventilstössel (5) infolge hydraulisch, pneumatisch und/oder mechanisch erzeugter Schliesskräfte geschlossen ist und bei einer Betätigung des Ventilstössels (5) zum Öffnen des Ventilspalts (7) diese Schliesskräfte überwunden werden müssen,
und wobei die Anordnung weiter einen Stellantrieb (11) umfasst, mittels welchem im bestimmungsgemässen Betrieb der Ventilstössel (5) zum Öffnen des Ventilspalts (7) entgegen den Schliesskräften verschoben werden kann, insbesondere in mehreren Stufen oder stufenlos,
**dadurch gekennzeichnet**, das der Stellantrieb (11) ein pneumatisch, hydraulisch oder elektrisch ansteuerbares bzw. aktivierbares Antriebselement (12) umfasst, zur Bereitstellung der Betätigungskräfte zum axialen Verschieben des Ventilstössels (5) zwecks Öffnung des Ventilspaltes (7),
wobei das Antriebselement (12) in axialer Verlängerung des Ventilstössel (5) in der Schliessbewegungsrichtung (S) des Ventilstössels (5) angeordnet ist, und insbesondere, wobei das Antriebselement (12) direkt auf das in die Schliessbewegungsrichtung (S) zeigende Ende des Ventilstössels (5) einwirken kann, zur Verschiebung des Ventilstössels (5) entgegen der Schliessbewegungsrichtung (S)
und wobei das Antriebselement (12) mittels einer insbesondere als Druckknopf ausgebildeten Tragstruktur (13) in der Einstelleinheit (3) aufgenommen ist und wobei diese Tragstruktur (13) axialverschieblich entlang der Verschiebeachse des Ventilstössels (5) in der Einstelleinheit (3) gelagert ist, derart, dass sie bei geschlossenem Ventilspalt (7) aus einer Grundposition durch manuelle Druckbetätigung von aussen her zusammen mit dem darin aufgenommenen Antriebselement (12) entgegen der Schliessbewegungsrichtung (S) des Ventilstössels (5) verschoben werden kann, unter einem zumindest über einen Teil des Verschiebeweges gleichzeitigen Verschieben des Ventilstössels (5) in diese Richtung und einem daraus resultierenden Öffnen des Ventilspaltes (7).

2. Anordnung nach Anspruch 1, wobei das Antriebselement ein elektrisch ansteuerbares bzw. aktivierbares Dehnstoffelement (12) ist.

3. Anordnung nach einem der vorangehenden Ansprüche, wobei das Ventil als Verteilerventil für die Verwendung im Zu- oder Rücklauf eines Wasserkreislaufs zum Heizen oder Kühlen ausgebildet ist, indem das Gehäuse (1, 16) im Wesentlichen von einem die Zu- oder Ableitung bildenden Verteilerbalken (1) und einer von dem Verteilerbalken (1) abgehenden, die Ableitung (AL) oder die Zuleitung bildenden Zweigleitung (2) gebildet ist, wobei die Einstelleinheit (3) gegenüberliegend der Zweigleitung (2) in den Verteilerbalken (1) eindringt.

4. Anordnung nach Anspruch 3, wobei der Ventilschliesskörper (4, 4a) an dem der Zweigleitung (2) zugewandten Ende des Ventilstössels (5) angeordnet ist.

5. Anordnung nach einem der Ansprüche 3 bis 4, wobei das Ventil derartig ausgebildet ist, dass der Ventilstössel (5) zum Öffnen des Ventilspalts (7) entgegen den Schliesskräften, insbesondere entgegen einer von Federmitteln (8) erzeugten Federkraft, in Richtung auf die Zweigleitung (2) zu verschoben werden muss.

6. Anordnung nach einem der vorangehenden Ansprüche, wobei ein feststehendes Gehäuseteil der Einstelleinheit (3), welches zumindest teilweise von dem Ventilstössel (5) durchsetzt ist, radiale oder halbaxiale Durchtrittsöffnungen (14), insbesondere mit kreisrunder oder rechteckiger Form, aufweist, durch welche das Medium je nach Durchströmungsrichtung des Ventils von der Zuleitung zum Ventilspalt (7) strömen kann oder vom Ventilspalt (7) zu der Ableitung strömen kann.

7. Anordnung nach Anspruch 6, wobei das feststehende Gehäuseteil der Einstelleinheit (3) insbesondere stirnseitig über Dichtflächen und/oder über eine Dichtung (15) mit einem die Zu- oder Ableitung (AL) bildenden feststehenden Gehäuseteil (16) des Ventilgehäuses (1, 16) in abdichtenden Kontakt steht, derart, dass zwischen den Durchtrittsöffnungen (14) und der von diesem Gehäuseteil (16) gebildeten Zu- oder Ableitung (AL) ein fluiddichter Strömungskanal gebildet ist.

8. Anordnung nach Anspruch 7 und nach einem der Ansprüche 3 bis 5, wobei es sich bei dem feststehenden Gehäuseteil (16) des Ventilgehäuses um ein feststehendes Gehäuseteil der Zweigleitung (2) handelt und wobei das feststehende Gehäuseteil der Einstelleinheit (3), insbesondere stirnseitig, über Dichtflächen und/oder über eine Dichtung (15), mit dem feststehenden Gehäuseteil der Zweigleitung (2) in abdichtenden Kontakt steht, derart, dass zwischen den Durchtrittsöffnungen (14) und der Zweigleitung (2) ein fluiddichter Strömungskanal gebildet ist.

9. Anordnung nach einem der Ansprüche 3 bis 5 und 8, wobei das Antriebselement (12) in axialer Verlängerung des Ventilstössels (5) in der Richtung wegzeigend von der Zweigleitung (2) angeordnet ist, und insbesondere, wobei das Antriebselement (12) direkt auf das der Zweigleitung (2) abgewandte Ende des Ventilstössels (5) einwirken kann, zur Verschiebung des Ventilstössels (5) in Richtung auf die Zweigleitung (2) zu.

10. Anordnung nach einem der vorangehenden Ansprüche, wobei die Tragstruktur (13) derartig in der Einstelleinheit (3) gelagert ist, dass sie in einer Verschiebeposition, in welcher der Ventilspalt (7) geöffnet ist, insbesondere maximal geöffnet ist, verrastet, so dass sie bei einem Aufheben der manuellen Druckbetätigung in dieser Verschiebeposition verbleibt.

11. Anordnung nach Anspruch 10, wobei die Tragstruktur (13) derartig in der Einstelleinheit (3) gelagert und das Antriebselement (12) derartig darin angeordnet ist, dass die Verrastung der Tragstruktur (13) durch Ansteuerung bzw. Aktivierung des Antriebselements (12) aufgehoben werden kann.

12. Anordnung nach einem der Ansprüche 10 bis 11, wobei die Tragstruktur (13) derartig in der Einstelleinheit (3) gelagert ist, dass von aussen visuell erkennbar ist, ob sich die Tragstruktur (13) in der Grundposition oder in der verrasteten Verschiebeposition befindet.

13. Anordnung nach einem der vorangehenden Ansprüche, wobei der Stellantrieb (11) während dem bestimmungsgemässen Betrieb des Ventils austauschbar ist.

14. Anordnung nach einem der vorangehenden Ansprüche, wobei zur Erzeugung zumindest eines Teils der Schliesskräfte Federmittel (8) vorhanden sind, welche derartig mit dem Ventilschliesskörper (4, 4a) oder dem Ventilstössel (5) wirkverbunden sind, dass der Ventilspalt (7) bei nicht-betätigtem Ventilstössel (5) zumindest zum Teil infolge der Federkraft der Federmittel (8) geschlossen ist und bei einer Betätigung des Ventilstössels (5) zum Öffnen des Ventilspalts (7) die Federkraft der Federmittel (8) überwunden werden muss.

15. Anordnung nach einem der vorangehenden Ansprüche, wobei die Zuleitung (ZL) und die Ableitung (AL) von einem gemeinsamen Gehäuseteil oder von separat ausgebildeten Gehäuseteilen (1, 16) gebildet sind.

16. Anordnung nach einem der vorangehenden Ansprüche, wobei die Einstelleinheit (3) gegenüberliegend der Zuleitung oder gegenüberliegend der Ableitung (AL) in das Gehäuse (1, 16) eindringt.

17. Anordnung nach Anspruch 16, wobei der Ventilschliesskörper (4, 4a) an dem der gegenüberliegenden Zu- oder Ableitung (AL) zugewandten Ende des Ventilstössels (5) angeordnet ist.

18. Anordnung nach einem der Ansprüche 16 bis 17, wobei das Ventil derartig ausgebildet ist, dass der Ventilstössel (5) zum Öffnen des Ventilspalts (7) in Richtung auf die gegenüberliegende Zu- oder Ableitung (AL) zu verschoben werden muss.

19. Anordnung nach einem der vorangehenden Ansprüche, wobei der Ventilschliesskörper (4, 4a) und der Ventilsitzkörper (6) derartig ausgebildet sind, dass sich bei geschlossenem Ventilspalt (7) eine zumindest teilweise radiale Abdichtung zwischen dem Ventilschliesskörper (4, 4a) und dem Ventilsitzkörper (6) ergibt, insbesondere über ein zumindest teilweise radial abdichtendes Dichtelement (4a) des Ventilschliesskörpers (4, 4a).

20. Anordnung nach Anspruch 19, wobei die radial äusserste Umfangsbegrenzung des Ventilschliesskörpers (4, 4a) von einem separat ausgebildeten Dichtelement (4a), insbesondere von einem O-Ring (4a), gebildet ist, welches bei geschlossenem Ventilspalt (7) eine zumindest teilweise radiale Abdichtung gegenüber dem Ventilsitzkörper (6) bewirkt und gleichzeitig formschlüssig verhindert, dass der Ventilstössel (5) mit dem Ventilschliesskörper (4, 4a) in der Schliessbewegungsrichtung (S) des Ventilstössels aus der Einstelleinheit (3) entfernt werden kann.

21. Anordnung nach einem der vorangehenden Ansprüche, wobei das Ventil im Lieferzustand über insbesondere werkzeuglos entfernbare Arretierungsmittel (22) verfügt, mittels welchen der Ventilstössel (5) insbesondere formschlüssig in einer axialen Position arretiert ist, in welcher der Ventilspalt (7) geöffnet ist, insbesondere maximal geöffnet ist.

22. Anordnung nach Anspruch 21, wobei die Arretierungsmittel einen Arretierungsstift (22) umfassen, welcher von aussen her radial in die Einstelleinheit (3) eindringt und den Ventilstössel (5) dabei radial durchsetzt oder radial in diesen eindringt.

23. Anordnung nach einem der vorangehenden Ansprüche, wobei der Ventilstössel (5) zumindest im Bereich seines dem Ventilschliesskörper (4, 4a) abgewandten Endes aus einem elektrisch schlecht bzw. nicht leitenden Material gebildet ist, insbesondere aus einem Kunststoff.

24. Verteileranordnung umfassend mindestens zwei Anordnungen nach einem der vorangehenden Ansprüche, wobei die Gehäuse (1, 16) der Ventile mit einem gemeinsamen Verteilerbalken (1) gebildet sind.

## Claims

1. An arrangement comprising a valve for use in the supply or return of a water circuit for heating or cooling, comprising a housing (1, 16) forming a supply line (ZL) and a discharge line (AL), and an adjustment unit (3) formed separately from the housing (1, 16) and penetrating the housing (1, 16) from the outside for adjusting a flow rate through the valve from the supply line (ZL) to the discharge line (AL),
wherein the adjustment unit comprises a base body (9) with which it is screwed into a receiving opening of the valve housing (1), and a valve tappet (5), a valve closing body (4, 4a) and a valve seat body (6),
wherein the valve seat body (6) is stationary with respect to the base body (9) and wherein the valve tappet (5) is mounted in the base body (9) in an axially displaceable manner relative to the base body (9) and is operatively connected to the valve closing body (4, 4a) in such a way that the valve closing body (4a, 4a) together with the valve seat body (6) forms a valve gap (7) which can be adjusted by axial displacement of the valve tappet (5),
wherein the valve is designed in such a way that the valve gap (7) is closed during intended operation with the valve tappet (5) not actuated as a result of closing forces generated hydraulically, pneumatically and/or mechanically, and when the valve tappet (5) is actuated to open the valve gap (7) these closing forces need to be overcome,
and wherein the arrangement further comprises an actuator (11) by means of which, during the intended operation, the valve tappet (5) can be displaced against the closing forces in order to open the valve gap (7), in particular in several steps or continuously,
**characterised in that** the actuator (11) comprises a pneumatically, hydraulically or electrically controllable or actuatable, respectively, drive element (12) for providing the actuating forces for axially displacing the valve tappet (5) in order to open the valve gap (7),
wherein the drive element (12) is arranged in axial extension of the valve tappet (5) in the closing movement direction (S) of the valve tappet (5), and in particular wherein the drive element (12) can act directly on the end of the valve tappet (5) pointing in the closing movement direction (S), for displacing the valve tappet (5) against the closing movement direction (S)
and wherein the drive element (12) is accommodated in the adjustment unit (3) by means of a support structure (13) designed in particular as a push button, and wherein this support structure (13) is mounted in the adjustment unit (3) so as to be axially displaceable along the axis of displacement of the valve tappet (5), in such a way that, when the valve gap (7) is closed, it can be displaced from a basic position by manual pressure actuation from the outside together with the drive element (12) accommodated therein in the opposite direction to the closing movement direction (S) of the valve tappet (5), with a simultaneous displacement of the valve tappet (5) in this direction over at least a part of the displacement path and a resulting opening of the valve gap (7) resulting therefrom.

2. Arrangement according to claim 1 wherein the drive element is an electrically controllable or activatable, respectively, expansion element (12).

3. Arrangement according to one of the preceding claims, wherein the valve is designed as a distribution valve for use in the supply or return flow of a water circuit for heating or cooling, in that the housing (1, 16) is essentially formed by a distribution beam (1) forming the supply line or the discharge line and by a branch line (2) extending from the distribution beam (1) and forming the discharge line (AL) or the supply line, wherein the adjustment unit (3) penetrates the distribution beam (1) opposite the branch line (2).

4. Arrangement according to claim 3 wherein the valve closing body (4, 4a) is arranged at the end of the valve tappet (5) facing the branch line (2).

5. Arrangement according to one of the claims 3 to 4 wherein the valve is designed in such a way that the valve tappet (5) needs to be displaced in the direction of the branch line (2) in order to open the valve gap (7) against the closing forces, in particular against a spring force generated by spring means (8).

6. Arrangement according to one of the preceding claims wherein a stationary housing part of the adjustment unit (3) which is at least partially penetrated by the valve tappet (5) has radial or semi-axial passage openings (14), in particular of a circular or rectangular shape, through which the medium can flow from the supply line to the valve gap (7) or can flow from the valve gap (7) to the discharge line, depending on the direction of flow through the valve.

7. Arrangement according to claim 6 wherein the stationary housing part of the adjustment unit (3) is in a sealing contact, in particular at the end face via sealing surfaces and/or via a sealing (15), with a stationary housing part (16) of the valve housing (1, 16) forming the supply or discharge line (AL), in such a way that a fluid-tight flow channel is formed between the passage openings (14) and the supply or discharge line (AL) formed by this housing part (16).

8. Arrangement according to claim 7 and according to one of the claims 3 to 5 wherein the stationary housing part (16) of the valve housing is a stationary housing part of the branch line (2) and wherein the stationary housing part of the adjustment unit (3) is in a sealing contact, in particular at the end face, with the stationary housing part of the branch line (2) via sealing surfaces and/or via a sealing (15) in such a way that a fluid-tight flow channel is formed between the passage openings (14) and the branch line (2) .

9. Arrangement according to one of the claims 3 to 5 and 8 wherein the drive element (12) is arranged in an axial extension of the valve tappet (5) in the direction pointing away from the branch line (2), and in particular, wherein the drive element (12) can act directly on the end of the valve tappet (5) facing away from the branch line (2), for displacement of the valve tappet (5) in the direction towards the branch line (2).

10. Arrangement according to one of the preceding claims wherein the support structure (13) is mounted in the adjustment unit (3) in such a way that it is locked in a displacement position in which the valve gap (7) is opened, in particular maximally opened, such that it remains in this displacement position when the manual pressure actuation is cancelled.

11. Arrangement according to claim 10 wherein the support structure (13) is mounted in the adjustment unit (3) in such a way and wherein the drive element (12) is arranged therein in such a way that the locking of the support structure (13) can be cancelled by actuation or activation, respectively, of the drive element (12).

12. Arrangement according to one of claims 10 to 11 wherein the support structure (13) is mounted in the adjustment unit (3) in such a way that it is visually recognizable from outside whether the support structure (13) is in the basic position or in the locked displacement position.

13. Arrangement according to one of the preceding claims wherein the actuator (11) is replaceable during the intended operation of the valve.

14. Arrangement according to one of the preceding claims wherein spring means (8) are present for generating at least a part of the closing forces, which spring means are operatively connected to the valve closing body (4, 4a) or the valve tappet (5) in such a way that the valve gap (7) is closed at least partially as a result of the spring force of the spring means (8) when the valve tappet (5) is not actuated and that the spring force of the spring means (8) must be overcome when the valve tappet (5) is actuated in order to open the valve gap (7).

15. Arrangement according to one of the preceding claims wherein the supply line (ZL) and the discharge line (AL) are formed by a common housing part or by separately formed housing parts (1, 16).

16. Arrangement according to one of the preceding claims wherein the adjustment unit (3) penetrates the housing (1, 16) opposite the supply line or opposite the discharge line (AL).

17. Arrangement according to claim 16 wherein the valve closing body (4, 4a) is arranged at the end of the valve tappet (5) which end faces the opposite supply line or the discharge line (AL).

18. Arrangement according to one of the claims 16 to 17 wherein the valve is designed in such a way that the valve tappet (5) needs to be displaced in the direction towards the opposing supply line or discharge line (AL) in order to open the valve gap (7)

19. Arrangement according to one of the preceding claims wherein the valve closing body (4, 4a) and the valve seat body (6) are designed in such a way that, when the valve gap (7) is closed, an at least partial radial seal is produced between the valve closing body (4, 4a) and the valve seat body (6), in particular via an at least partially radially sealing sealing element (4a) of the valve closing body (4, 4a).

20. Arrangement according to claim 19 wherein the radially outermost circumferential boundary of the valve closing body (4, 4a) is formed by a separately formed sealing element (4a), in particular by an O-ring (4a), which, when the valve gap (7) is closed, effects an at least partial radial sealing with respect to the valve seat body (6) and at the same time prevents in a form-locking manner that the valve tappet (5) with the valve closing body (4, 4a) can be removed from the adjustment unit (3) in the closing movement direction (S) of the valve tappet.

21. Arrangement according to one of the preceding claims wherein the valve in the delivery state has locking means (22) which can in particular be removed without tools, by means of which the valve tappet (5) is in particular in a form-locking manner locked in an axial position in which the valve gap (7) is open, in particular is open to the maximum extent.

22. Arrangement according to claim 21 wherein the locking means comprise a locking pin (22) which penetrates radially into the adjustment unit (3) from the outside and which thereby radially crosses the valve tappet (5) or radially penetrates it.

23. Arrangement according to one of the preceding claims wherein the valve tappet (5) is formed, at least in the region of its end facing away from the valve closing body (4, 4a), from a material which is poorly electrically conducting or non-conducting, respectively, in particular from a plastic.

24. Distribution arrangement comprising at least two arrangements according to any one of the preceding claims wherein the housing (1, 16) of the valves are formed with a common distribution beam (1).

## Revendications

1. Agencement comprenant une soupape destinée à être utilisée dans la conduite d'alimentation ou la conduite de retour d'un circuit d'eau de chauffage ou de refroidissement, avec un boîtier (1, 16) qui forme une conduite d'alimentation (ZL) et une conduite d'évacuation (AL), et une unité de réglage (3) qui est formée séparément du boîtier (1, 16) et pénètre dans le boîtier (1, 16) de manière à régler un débit à travers la soupape de la conduite d'alimentation (ZL) à la conduite d'évacuation (AL),
l'unité de réglage comprenant un corps de base (9), au moyen duquel elle est vissée dans une ouverture de réception du boîtier de soupape (1), ainsi qu'un plongeur de soupape (5), un corps de fermeture de soupape (4, 4a) et un corps de siège de soupape (6),
le corps de siège de soupape (6) par rapport au corps de base (9) étant fixe et le plongeur de soupape (5) étant supporté de manière axialement mobile dans le corps de base (9) par rapport au corps de base (9) et étant relié de manière opérationnelle au corps de fermeture de soupape (4, 4a) de telle sorte que le corps de fermeture de soupape (4, 4a) forme avec le corps de siège de soupape (6) une fente de soupape (7) qui est réglable en déplaçant axialement le plongeur de soupape (5),
la soupape étant conçue de telle sorte que la fente de soupape dans l'opération prévue, lorsque le plongeur de la soupape (5) n'est pas actionné, est fermée en raison des forces de fermeture générées hydrauliquement, pneumatiquement et/ou mécaniquement et lorsque le plongeur de soupape (5) est actionné afin d'ouvrir la fente de soupape (7), ces forces de fermeture doivent être surmontées,
et l'agencement comprenant en outre un actionneur (11), au moyen duquel, dans l'opération prévue, le plongeur de soupape (5) peut être déplacé contre les forces de fermeture pour l'ouverture de la fente de soupape (7), en particulier en plusieurs étapes ou en continu,
**caractérisé en ce que** l'actionneur (11) comprend un élément d'entraînement (12) pouvant être commandé ou activé pneumatiquement, hydrauliquement ou électriquement, respectivement, pour fournir les forces d'actionnement pour le déplacement du plongeur de soupape (5) afin d'ouvrir la fente de soupape (7),
l'élément d'entraînement (12) étant disposé dans le prolongement axial du plongeur de soupape (5) dans le sens du mouvement de fermeture (S) du plongeur de soupape (5), et en particulier, l'élément d'entraînement (12) pouvant agir directement sur l'extrémité du plongeur de soupape (5) qui est dirigée dans le sens du mouvement de fermeture (S), pour déplacer le plongeur de soupape (5) contre le sens du mouvement de fermeture (S)
et l'élément d'entraînement (12) étant reçu dans l'unité de réglage (3) au moyen d'une structure de support (13), qui est en particulier réalisée sous la forme d'un bouton-plongeur, et cette structure de support (13) étant supportée de manière axialement mobile le long de l'axe de déplacement du plongeur de soupape (5) dans l'unité de réglage, de telle sorte que, lorsque la fente de soupape (7) est fermé, il peut être déplacé par un actionnement manuel de poussée de l'extérieur avec l'élément d'entraînement (12) qui y est reçu à partir d'une position de base contre le sens du mouvement de fermeture (S) du plongeur de soupape (5), déplaçant ainsi en même temps le plongeur de soupape (5) dans cette direction sur au moins une partie du trajet de déplacement et entraînant ainsi une ouverture de la fente de la soupape (7).

2. Agencement selon la revendication 1, dans lequel l'élément d'entraînement est un élément de matériau de dilatation (12) pouvant être commandé ou activé électriquement, respectivement.

3. Agencement selon l'une des revendications précédentes, la soupape étant conçue comme soupape de distribution pour l'utilisation dans la conduite d'alimentation ou la conduite de retour d'un circuit d'eau de chauffage ou de refroidissement, de sorte que le boîtier (1, 16) est formé essentiellement par un barreau de distribution (1) qui forme la conduite d'alimentation ou la conduite d'évacuation et une conduite de dérivation (2) qui s'étend à partir du barreau de distribution (1) et qui forme la conduite d'évacuation (AL) ou la conduite d'alimentation, l'unité de réglage (3) pénétrant dans le barreau de distribution (1) en face de la conduite de dérivation (2).

4. Agencement selon la revendication 3, dans lequel le corps de fermeture de soupape (4, 4a) est disposé à l'extrémité du plongeur de soupape (5) qui est tournée vers la conduite de dérivation (2).

5. Agencement selon l'une des revendications 3 à 4, dans lequel la soupape est conçue de telle sorte que le plongeur de soupape (5) pour ouvrir la fente de soupape (7) doit être déplacé contre les forces de fermeture, en particulier contre une force de ressort générée par des moyens de ressort (8), en direction de la conduite de dérivation (2).

6. Agencement selon l'une des revendications précédentes, dans lequel une partie fixe du boîtier de l'unité de réglage (3), qui est au moins partiellement traversée par le plongeur de soupape (5), comporte des ouvertures de passage radiales ou semi-axiales, en particulier de forme circulaire ou rectangulaire, à travers lesquelles le fluide, selon le sens de passage de la soupape, peut s'écouler de la conduite d'alimentation vers la fente de soupape (7) ou peut s'écouler de la fente de la soupape (7) vers la conduite d'évacuation.

7. Agencement selon la revendication 6, dans lequel la partie fixe du boîtier de l'unité de réglage (3), en particulier avec sa face frontale, est en contact étanche, par l'intermédiaire de surfaces d'étanchéité et/ou d'un joint (15), avec une partie fixe (16) du boîtier de la soupape (1, 16) qui forme la conduite d'alimentation ou la conduite d'évacuation (AL), de sorte qu'entre les ouvertures de passage (14) et la conduite d'alimentation ou la conduite d'évacuation (AL) formée par cette partie du boîtier (16), il se forme un canal d'écoulement étanche au fluide.

8. Agencement selon la revendication 7 et selon l'une des revendications 3 à 5, dans lequel la partie fixe (16) du boîtier de soupape est une partie fixe du boîtier de dérivation (2) et la partie fixe du boîtier de l'unité de réglage (3), en particulier avec sa face frontale, est en contact étanche, par l'intermédiaire de surfaces d'étanchéité et/ou d'un joint (15), avec la partie fixe du boîtier de la conduite de dérivation (2), de telle sorte qu'un canal d'écoulement étanche au fluide est formé entre les ouvertures de passage (14) et la conduite de dérivation (2).

9. Agencement selon l'une des revendications 3 à 5 et 8, l'élément d'entraînement (12) étant agencé dans une prolongation axiale du plongeur de soupape (5) dans une direction bifurquée de la conduite de dérivation (2), et particulièrement l'élément d'entraînement pouvant agir directement sur l'extrémité du plongeur de soupape (5) opposée à la conduite de dérivation (2), afin de déplacer le plongeur de soupape (5) en direction vers la conduite de soupape (2).

10. Agencement selon l'une des revendications précédentes, la structure de support (13) étant supportée dans l'unité de réglage (3) de telle sorte qu'elle s'engage dans une position de déplacement, dans laquelle la fente de soupape (7) est ouverte, en particulier ouverte au maximum, de telle sorte qu'elle reste dans cette position de déplacement quand la poussée manuelle est annulée.

11. Agencement selon la revendication 10, dans lequel la structure de support (13) est montée dans l'unité de réglage (3) et l'élément d'entraînement (12) y est disposé de telle sorte que le verrouillage de la structure de support (13) peut être annulé en actionnant ou en activant l'élément d'entraînement (12).

12. Agencement selon l'une des revendications 10 à 11, la structure de support (13) étant montée dans l'unité de réglage (3) de telle sorte qu'il est possible de reconnaître visuellement de l'extérieur si la structure de support (13) se trouve en position de base ou en position de déplacement verrouillée.

13. Agencement selon l'une des revendications précédentes, dans lequel l'actionneur (11) peut être remplacé pendant le bon fonctionnement de la vanne.

14. Agencement selon l'une des revendications précédentes, dans lequel des moyens de ressort (8) sont présents pour générer au moins une partie des forces de fermeture, qui sont en liaison active avec le corps de fermeture de la soupape (4, 4a) ou le plongeur de soupape (5) de telle sorte que la fente de la soupape (7) est fermée lorsque le plongeur de soupape (5) n'est pas actionné, au moins partiellement sous l'effet de la force du ressort du moyen de ressort (8), et lorsque le plongeur de soupape (5) est actionné pour ouvrir la fente de soupape (7), la force du ressort du moyen de ressort (8) doit être surmontée.

15. Agencement selon l'une des revendications précédentes, dans lequel la conduite d'alimentation (ZL) et la conduite d'évacuation (AL) sont formées par une partie de boîtier commune ou par des parties de boîtier (1, 16) formées séparément.

16. Agencement selon l'une des revendications précédentes, dans lequel l'unité de réglage (3) pénètre dans le boîtier (1, 16) en face de la conduite d'alimentation ou en face de la conduite d'évacuation (AL) .

17. Agencement selon la revendication 16, dans lequel le corps de fermeture de soupape (4, 4a) est disposé à l'extrémité du plongeur de soupape (5) en regard de la conduite d'alimentation ou d'évacuation opposée (AL).

18. Agencement selon l'une des revendications 16 à 17, dans lequel la soupape est conçue de telle sorte que le plongeur de soupape (5) doit être déplacé dans la direction de la conduite d'alimentation ou d'évacuation opposée (AL) pour ouvrir la fente de soupape (7).

19. Agencement selon l'une des revendications précédentes, le corps de fermeture de soupape (4, 4a) et le corps de siège de soupape (6) étant conçus de telle sorte que, lorsque la fente de soupape (7) est fermé, une étanchéité radiale au moins partielle est réalisée entre le corps de fermeture de soupape (4, 4a) et le corps de siège de soupape (6), en particulier par l'intermédiaire d'un élément d'étanchéité (4a) du corps de fermeture de soupape (4, 4a) fermant au moins partiellement radialement.

20. Agencement selon la revendication 19, dans lequel la limite circonférentielle radialement la plus extérieure du corps de fermeture de soupape (4, 4a) est formée par un élément d'étanchéité (4a) formé séparément, en particulier par un joint torique (4a), qui, lorsque la fente de soupape (7) est fermée, assure une étanchéité radiale au moins partielle par rapport au corps du siège de soupape (6) et empêche en même temps de manière positive le retrait du plongeur de soupape (5) avec le corps de fermeture de soupape (4, 4a) de l'unité de réglage (3) dans le sens du mouvement de fermeture (S) du plongeur de soupape.

21. Agencement selon l'une des revendications précédentes, dans lequel la soupape présente, à l'état de livraison, en particulier des moyens de verrouillage (22) qui peuvent être retirés sans outil et au moyen desquels le plongeur de soupape (5) est en particulier verrouillé par complémentarité de forme dans une position axiale dans laquelle la fente de soupape (7) est ouverte, en particulier est ouverte au maximum.

22. Agencement selon la revendication 21, dans lequel les moyens de verrouillage comprennent une goupille de verrouillage (22) qui pénètre radialement dans l'unité de réglage (3) depuis l'extérieur et pénètre ainsi radialement ou entre radialement dans le plongeur de soupape (5).

23. Agencement selon l'une des revendications précédentes, dans lequel le plongeur de soupape (5) est formé, au moins dans la zone de son extrémité opposée au corps de fermeture de soupape (4, 4a), d'un matériau électriquement peu ou pas conducteur, en particulier d'une matière plastique.

24. Dispositif de distribution comprenant au moins deux dispositifs selon l'une des revendications précédentes, dans lequel le boîtier des soupapes est formé par un collecteur de distribution commun.
